(19) Europäisches Patentamt
European Patent Office
Office européen des brevets

(11) **EP 2 863 335 A1**

(12) **EUROPEAN PATENT APPLICATION**
published in accordance with Art. 153(4) EPC

(43) Date of publication:
**22.04.2015 Bulletin 2015/17**

(51) Int Cl.:
***G06K 9/00*** *(2006.01)*

(21) Application number: **13832559.2**

(22) Date of filing: **31.07.2013**

(86) International application number:
**PCT/CN2013/080526**

(87) International publication number:
**WO 2014/032496 (06.03.2014 Gazette 2014/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.08.2012 CN 201210309313**

(71) Applicant: **Tencent Technology Shenzhen Company Limited Shenzhen, Guangdong 518044 (CN)**

(72) Inventors:
• **RAO, Feng**
 **Shenzhen City**
 **Guangdong 518044 (CN)**

• **CHEN, Bo**
 **Shenzhen City**
 **Guangdong 518044 (CN)**
• **XIAO, Bin**
 **Shenzhen City**
 **Guangdong 518044 (CN)**
• **LIU, Hailong**
 **Shenzhen City**
 **Guangdong 518044 (CN)**
• **XIONG, Pengfei**
 **Shenzhen City**
 **Guangdong 518044 (CN)**

(74) Representative: **Brevalex**
 **95, rue d'Amsterdam**
 **75378 Paris Cedex 8 (FR)**

(54) **METHOD, DEVICE AND STORAGE MEDIUM FOR LOCATING FEATURE POINTS ON HUMAN FACE**

(57) The present invention relates to a method, device and storage medium for locating feature points on a human face. The method for locating feature points on a human face of the present invention comprises: preliminary locating of the position of a human face by combining human face detection with human eye matching, and acquiring preliminary locating information; according to the preliminary locating information, fitting feature points on the human face; and according to the fitting result, completing the locating of the feature points on the human face. The present invention has the beneficial effects that: by using human face detection and human eye matching at the same time, and incorporating at least one feature of an appearance model according to the preliminary locating information, the position information about a human face is more accurately located, and the location of the feature points on the human face is accurately accomplished.

EP 2 863 335 A1

Preliminarily locate a human face location through a face detecting technology in combination with an eye matching technology — S100

Fit human facial feature points according to the preliminary location information — S110

Accomplish the locating of human facial feature points according to a result of the fitting — S120

**Fig.1**

**Description**

**Technical Field**

The present disclosure relates to the field of Internet technologies, especially to a method and device for locating human facial feature points and a storage medium.

**Technical Background**

The locating of key feature points on a human face is not only an essential issue in a human face recognition research, but also a fundamental issue in the fields of graphics and computer vision. The locating of human facial feature points is such a technology that human face detection is conducted on a video stream by adopting technologies such as a digital image processing technology and a pattern recognition technology and key feature points on the human face are accurately located and tracked, for the purpose of determining and researching shape information of major organs such as mouth through the located key feature points on the human face.

The above locating is implemented by human face detecting technologies in an existing technical scheme, but a preliminary facial location located according to a result of human face detecting is not accurate enough in the prior art, resulting in that the locating of key feature points on the human face is not accurate enough, and hence the fitting of the key feature points on the human face is likely failed. In addition, an Active Shape Model (ASM) algorithm is adopted as a facial feature point fitting algorithm in the prior art, but the accuracy of the ASM algorithm is not high enough because only shape information is considered in the ASM algorithm.

**Summary**

The disclosure provides a method and device for locating human facial feature points and a storage medium, which are intended to solve problems of a failure in fitting key feature points on a human face and a low accuracy of the fitting which are caused in that locating of the key feature points on the human face is not accurate enough in the prior art.

The disclosure is realized as follows.

A method for locating human facial feature points, including:

preliminarily locating a human face location by a face detecting technology in combination with an eye matching technology, and obtaining preliminary location information;

fitting human facial feature points according to the preliminary location information; and

accomplishing locating of the human facial feature points according to a result of the fitting.

A technical scheme of another embodiment of the disclosure includes a device for locating human facial feature points, and the device includes a face detecting module, a feature point fitting module and a feature point locating module; where the face detecting module is configured to preliminarily locating for a location of a human face through a face detecting technology and an eye matching technology; the feature point fitting module is configured to fit human facial feature points according to the preliminary location information; and the feature point locating module is configured to accomplish the locating of the human facial feature points according to a result of the fitting.

In addition, the disclosure further provides a storage medium including computer-executable instructions, and the computer-executable instructions are configured to execute a method for locating human facial feature points including:

preliminarily locating a human face location by a face detecting technology in combination with an eye matching technology, and obtaining preliminary location information;

fitting human facial feature points according to the preliminary location information; and

accomplishing locating of the human facial feature points according to a result of the fitting.

Technical schemes of the disclosure possess following advantages or beneficial effects. The method and device for locating human facial feature points and the storage medium according to the embodiments of the disclosure implement preliminary locating of a face location by the face detecting technology in combination with the eye matching technology, therefore the facial location information of the human face can be located more accurately compared with the case of using the face detecting technology only. And the human facial feature points are fitted by using an Inverse Compositional algorithm according to the preliminary location information in conjunction with grayscale features, gradient features, and edge and angular point features, so as to complete the accurate locating of the human facial feature points. Appearance models such as gradient values in directions of X axis and Y axis as well as edge and angular point features are added in the AAM, thus making the fitting of the human facial feature points more accurate and effectively alleviating a problem of an existing AAM that local minimization and poor anti-interference ability likely occurs in the process of fitting.

**Description of Drawings**

Fig. 1 is a flow chart of a method for locating human facial feature points according to a first embodiment of the disclosure;

Fig. 2 is a flow chart of a method for locating human facial feature points according to a second embodiment of the disclosure;

Fig. 3 is a schematic diagram of an eye searching Region of Interest (ROI) of the method for locating human facial feature points according to an embodiment of the disclosure;

Fig. 4 is a schematic diagram of label points of facial feature points of the method for locating human facial feature points according to an embodiment of the disclosure;

Fig. 5 is a flow chart of modeling a facial feature point shape model in the method for locating human facial feature points according to an embodiment of the disclosure; and

Fig. 6 is a schematic structural diagram showing a device for locating human facial feature points according to an embodiment of the disclosure.

**Detailed description of the Embodiments**

To make the purpose, the technical scheme and the advantage of the disclosure more clear, the disclosure is further described in detail below in conjunction with the accompanying drawings and embodiments. It should be understood that the embodiments described here are only used for interpreting the disclosure instead of limiting the disclosure.

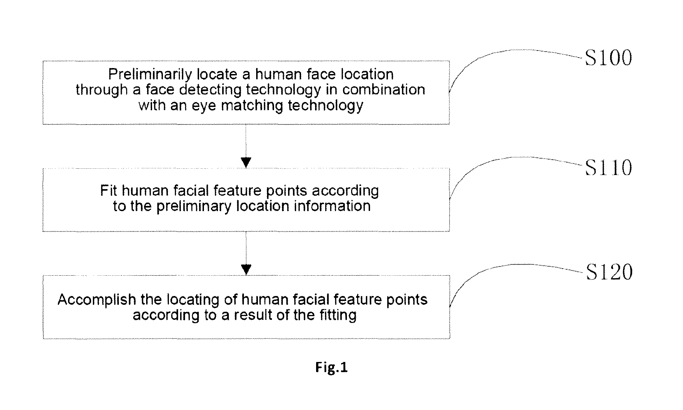

Referring to Fig. 1 which is a flow chart of a method for locating human facial feature points according to a first embodiment of the disclosure, the method for locating human facial feature points according to the first embodiment of the disclosure includes following steps.

Step S100: preliminarily locating a human face location through a face detecting technology in connection with an eye matching technology.

In Step S100, cascaded Harr feature classifiers are adopted in the present embodiment of the disclosure to detect a human face, so as to obtain preliminary location information and preliminary facial size information of the human face; further, an eye matching algorithm is used to match location information of both eyes, thus locating the human face location more accurately compared with the case where merely a face detecting method is used.

Step S110: fitting human facial feature points according to the preliminary location information and at least one feature of the AAM.

In Step S110, features of the AAM include features such as grayscale, gradient, edge and angular point; in the present embodiment of the disclosure, a combination of the AAM algorithm and multiple features such as grayscale values, gradient values in the directions of X axis and Y axis, edges and angular points is regarded as an appearance model of the AAM, thus the fitted locations of the human facial feature points are more accurate; in the present embodiment of the disclosure, the Inverse Compositional algorithm is adopted for the fitting of the human facial feature points.

Step S120: accomplishing the locating of the human facial feature points according to a result of the fitting.

In Step S120, an image of both eyes can be obtained according to locations of human facial feature points after the human facial feature points are located; in an image of a next frame, an eye searching ROI (a term in picture processing) in the image of the next frame is determined, and locations of both eyes in the current frame are obtained within the eye searching ROI by an image matching algorithm, with an image of both eyes in an image of a previous frame being used as a template. The eye searching ROI may be determined in such a way that: a center of the eye searching ROI overlaps with a center of an eye, and if eye_height and eye_width respectively represent a height and a width of an eye, and roi_height and roi_width respectively represent a height and a width of the eye searching ROI, then

$$roi\_height = \alpha \bullet eye\_height;$$

$$roi\_width = \beta \bullet eye\_width;$$

where $\alpha$ and $\beta$ represent ROI size control factors, and in this technical scheme, $\alpha$=3, and $\beta$=2.

In the method for locating human facial feature points of the present embodiment of the disclosure, the face location is preliminarily located by the face detecting technology in combination with the eye matching technology, so that the facial location information can be located more accurately compared with the case of using the face detecting technology only.

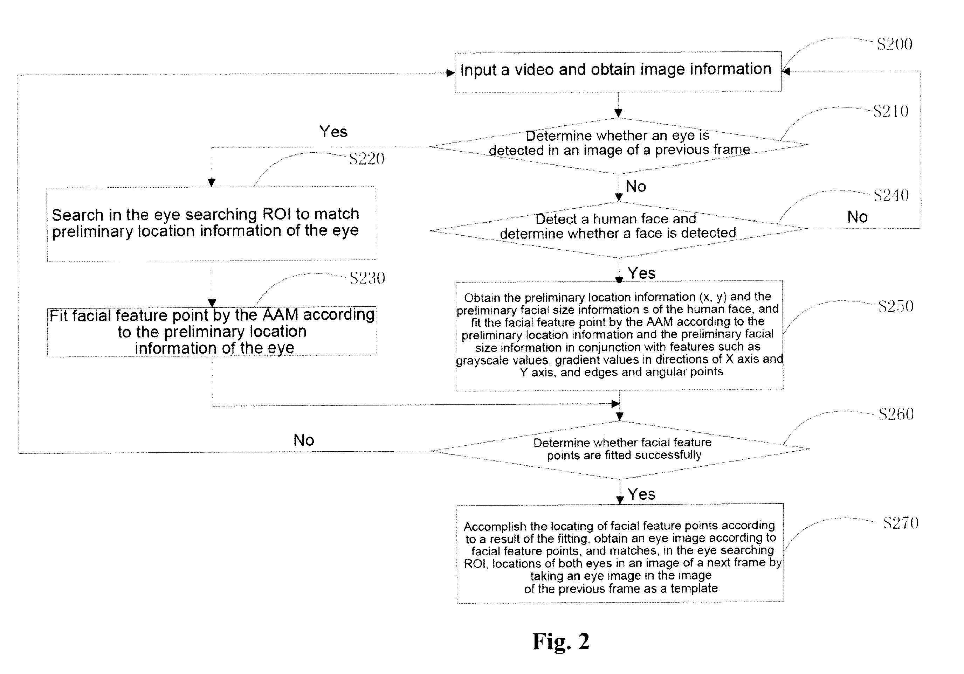

Referring to Fig. 2 which is a flow chart of the method for locating human facial feature points according to a second embodiment in the disclosure, the method for locating human facial feature points according to the second embodiment in the disclosure includes following steps.

Step S200: inputting a video, and obtaining corresponding facial image information in the video.

Step S210: determining whether an eye is detected in an image of a previous frame, and if an eye is detected in an image of a previous frame, executing Step S220; otherwise, executing Step S240.

In Step S210, an eye matching algorithm is adopted for eye matching at the time of face detecting in the present embodiment of the disclosure, thus locating the facial location more accurately compared with the case of using the face detecting method only.

Step S220: searching in the eye searching ROI (a term in picture processing), to match the preliminary location information of the eye.

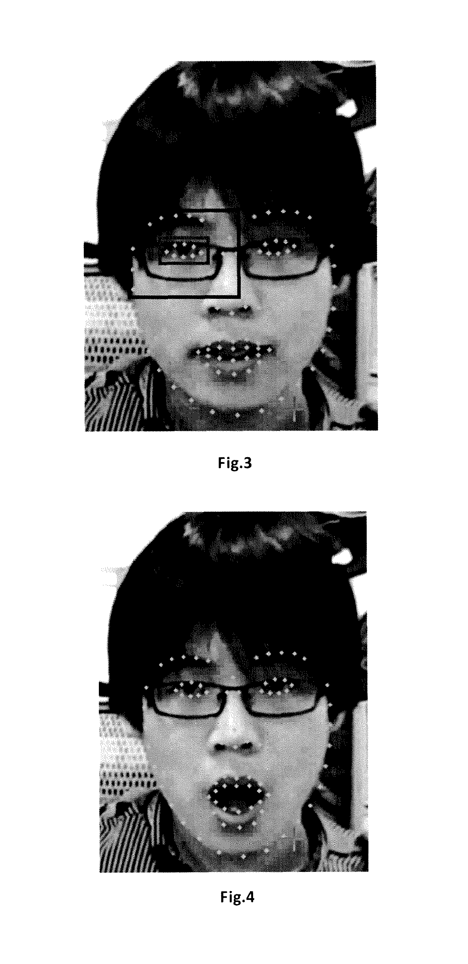

In Step S220, the eye searching ROI is determined in such a way that: a center of the eye searching ROI overlaps with a center of an eye, and if eye_height and eye_width respectively represent a height and a width of an eye, and roi_height and roi_width respectively represent a height and a width of the eye searching ROI, specifically referring to Fig. 3 which is a schematic diagram of the eye searching ROI of the disclosure, where an image of a left eye is enclosed by a smaller frame and a left eye searching ROI is enclosed by a bigger frame outside of the smaller frame, then,

$$roi\_height = \alpha \bullet eye\_height;$$

$$roi\_width = \beta \bullet eye\_width;$$

where $\alpha$ and $\beta$ represent ROI size control factors, and in the present embodiment of the disclosure, $\alpha$=3, and $\beta$=2; and the eye matching algorithm specifically includes that: if $T(x,y)$ represents an image of an eye, $I(x,y)$ represents an eye searching ROI, and $R(x, y)$ represents a matching resultant image, then

$$R(x,y) = \frac{\sum_{x',y'}(T(x',y') \bullet I(x+x',y+y'))}{\sqrt{\sum_{x',y'}T(x',y')^2 \bullet \sum_{x',y'}I(x+x',y+y')^2}}.$$

The matching resultant image $R(x,y)$ is located at a best-matching location in the searching ROI $I(x,y)$ and the eye image $T(x,y)$ when the matching resultant image $R(x,y)$ reaches its maximum value.

Step S230: facial feature points are fitted by the AAM according to the preliminary location information of the eye, and executing Step S260.

Step S240: detecting a human face and determining whether the human face is detected, and if the human face is detected, executing Step S250; otherwise, executing Step S200 again.

In Step S240, cascaded Harr feature classifiers are adopted to detect the human face in the present embodiment of the disclosure, so as to obtain the preliminary location information and preliminary facial size information of the human face.

Step S250: obtaining the preliminary location information (x, y) and the preliminary facial size information s of the human face, and fitting the facial feature points by the AAM according to the preliminary location information and the preliminary facial size information of the human face in conjunction with features such as grayscale values, gradient values in directions of X axis and Y axis of the preliminary location of the human face, edges and angular points.

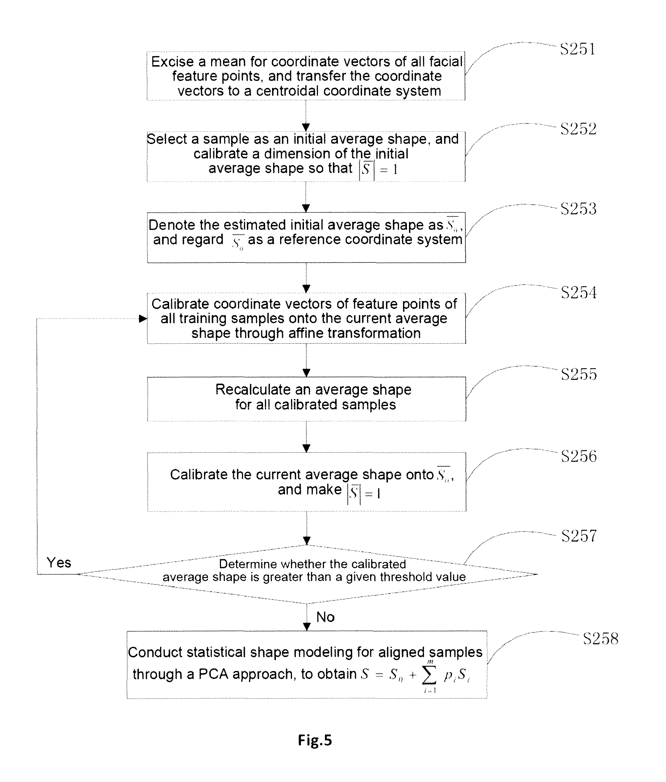

In Step S250, after the preliminary location information and the preliminary facial size information of the human face are obtained, features such as grayscale values, gradient values in directions of X axis and Y axis of the preliminary location of the human face, edges and angular points are combined as an appearance model of the AAM to fit the human facial feature points, thus making the fitted locations of the human facial feature points more accurate. The appearance model is a parameterized model, which is used for unified modeling of a shape and textures of a variable object through principal component analysis, and matching of an unknown object by using a two norm-minimizing strategy. The ASM of the human facial feature points may be represented by a vector $S = \{x_1,y_1...x_n,y_n\}$, where $x_i$, $y_i$ represent a location coordinate of the $i$-th human facial feature point. In the present embodiment of the disclosure, 82 facial label points are adopted, specifically referring to Fig. 4 which is a schematic diagram showing label points of the human facial feature points in the disclosure. In a training process of the AAM, a certain number of human facial expression images are collected, location coordinates of 82 human facial feature points are labeled manually as shown in Fig. 4 so as to obtain a coordinate vector $S = (x_1,y_1,x_2,y_2,...x_{82},y_{82})$ of the human facial feature points, a Procrustes algorithm is conducted on the coordinate vector of the human facial feature points for the purpose of geometrical alignment, and then the principal components analysis (PCA) based learning is performed based on the training data to obtain

$$S = S_0 + \sum_{i=1}^{m} p_i S_i$$

where $S_0$ represents an average shape, $S_i$ represents a PCA base of a shape, and $P_i$ represents a factor of the PCA base. A vector S of the corresponding ASM can be obtained as long as the respective factors $p_i$ are calculated in the process of fitting, specifically referring to Fig. 5 which is a flow chart of modeling a facial feature point shape model in the disclosure. The modeling approach of the shape model of the human facial feature points in the disclosure includes following steps.

Step S251: excising a mean for coordinate vectors of all facial feature points, and transferring the coordinate vectors to a centroidal coordinate system;

Step S252: selecting a sample as an initial average shape, and calibrating a dimension of the initial average shape so that $|\overline{S}| = 1$;

Step S253: denoting the estimated initial average shape as $\overline{S_0}$, and regarding $\overline{S_0}$ as a reference coordinate system;

Step S254: calibrating coordinate vectors of feature points of all training samples onto the current average shape through affine transformation;

Step S255: recalculating an average shape for all calibrated samples;

Step S256: calibrating the current average shape onto $\overline{S_0}$, obtaining $|\overline{S}| = 1$;

Step S257: determining whether the calibrated average shape is greater than a given threshold value, and if the calibrated average shape is greater than a given threshold value, executing Step S254 again; otherwise, executing Step S258;

Step S258: conducting statistical shape modeling for aligned samples through a PCA approach, to obtain

$$S = S_0 + \sum_{i=1}^{m} p_i S_i$$
.

An AAM $A$ is obtained by mapping points from a region surrounded by an ASM onto the average shape, where a piecewise affine mapping algorithm may be adopted for the mapping here; similarly, the PCA based learning may be conducted for the AAM, to obtain

$$A = A_0 + \sum_{i=1}^{n} \lambda_i A_i$$

where $A_0$ represents an average appearance, $A_i$ represents a PCA base of the AAM, and $\lambda_i$ represents a factor of the PCA base.

A modeling approach of the AAM specifically includes: mapping each training sample into the average shape, and then respectively calculating three kinds of features including grayscale values, gradient values in directions of X axis and Y axis, and feature values of edges and angular points so as to form the AAM; where a grayscale value $A_{gray}$

may be calculated in such a way that: if *I(x,y)* denotes a grayscale image of each sample mapped into the average shape, then a value of a grayscale appearance model is:

$$A_{gray}(x, y) = I(x, y)_.$$

The gradient values in directions of X axis and Y axis may be calculated in such a way of: calculating gradient values in directions of X axis and Y axis by using a Sobel operator (which is one of operators in image processing, and is mainly used for edge detecting):

$$G_x(x, y) = \begin{bmatrix} -1 & 0 & 1 \\ -2 & 0 & 2 \\ -1 & 0 & 1 \end{bmatrix} * I(x, y)$$

$$G_y(x, y) = \begin{bmatrix} -1 & -2 & -1 \\ 0 & 0 & 0 \\ 1 & 2 & 1 \end{bmatrix} * I(x, y)_.$$

Hence, values $A_{dx}$ and $A_{dy}$ of appearance models of gradient values in directions of X axis and Y axis can be obtained with following formulas:

$$A_{dx}(x, y) = G_x(x, y)^2;$$

$$A_{dy}(x, y) = G_y(x, y)^2.$$

The edge and angular point features $A_{edge\_and\_corner}$ may be calculated in such a way that: after gradient values in directions of X axis and Y axis are obtained, assuming:

$$Edge_{xx}(x, y) = G_x(x, y) \cdot G_x(x, y);$$

$$Edge_{yy}(x, y) = G_y(x, y) \cdot G_y(x, y);$$

$$Edge_{xy}(x, y) = G_x(x, y) \cdot G_y(x, y);$$

then $Edge_{xx}(x,y), Edge_{yy}(x,y), Edge_{xy}(x,y)$ are respectively filtered by using a 3x3 Gaussian window to obtain:

$$Edge_{xx}'(x, y) = \begin{bmatrix} 1 & 2 & 1 \\ 2 & 4 & 2 \\ 1 & 2 & 1 \end{bmatrix} * Edge_{xx}(x, y);$$

$$Edge_{yy}'(x, y) = \begin{bmatrix} 1 & 2 & 1 \\ 2 & 4 & 2 \\ 1 & 2 & 1 \end{bmatrix} * Edge_{yy}(x, y);$$

$$Edge_{xy}^{'}(x,y) = \begin{bmatrix} 1 & 2 & 1 \\ 2 & 4 & 2 \\ 1 & 2 & 1 \end{bmatrix} * Edge_{xy}(x,y);$$

and the edge and angular point features are calculated by the following formula:

$$A_{edge\_and\_corner}(x,y) =$$

$$(Edge_{xx}^{'}(x,y) + Edge_{yy}^{'}(x,y))^2 - 2 \cdot (Edge_{xx}^{'}(x,y) \cdot Edge_{yy}^{'}(x,y) - Edge_{xy}^{'}(x,y) \cdot Edge_{xy}^{'}(x,y))$$

The features such as grayscale values, gradient values in directions of X axis and Y axis, and edges and angular points are not represented in the same scale, and therefore need to be normalized to the same scale after calculation. A Sigmoidal approach is selected for such normalization of feature values in the present embodiment of the disclosure specifically as follows:

$$A_{gray}^{'}(x,y) = A_{gray}(x,y) / (A_{gray}(x,y) + \overline{A_{gray}(x,y)}) \;;$$

$$A_{dx}(x,y) = A_{dx}(x,y) / (A_{dx}(x,y) + A_{dx}(x,y)) \;;$$

$$A_{dy}^{'}(x,y) = A_{dy}(x,y) / (A_{dy}(x,y) + \overline{A_{dy}(x,y)}) \;;$$

$$A_{edge\_and\_corner}(x,y) =$$

$$A_{edge\_and\_corner}(x,y) / (A_{edge\_and\_corner}(x,y) + \overline{A_{edge\_and\_corner}(x,y)}).$$

After the normalization, these three kinds of features including grayscale values, gradient values in directions of X axis and Y axis, and edges and angular points are all in the same scale, and each training sample corresponds to these three kinds of features and four feature values; after the AAM with four feature values is obtained, the PCA based learning results in:

$$A = A_0 + \sum_{i=1}^{n} \lambda_i A_i \;.$$

In an embodiment of the disclosure, an Inverse Compositional algorithm (which is a commonly used algorithm in the art) is adopted to fit the human facial feature points and specifically includes: transforming an input image $I(x,y)$ according to four initial global affine transformation parameters $q$ obtained by a face detecting algorithm or an eye matching algorithm, obtaining $I(N(W(x|p)|q))$, where $W$ is defined as piecewise affine mapping from a basic shape $S_0$ to the current shape $S$, $N$ represents two-dimension similarity transformation, and $q$ represents a parameter of the similarity transformation, hence $N(x \mid q) = \begin{bmatrix} 1+a & -b \\ b & 1+b \end{bmatrix}\begin{bmatrix} x \\ y \end{bmatrix} + \begin{bmatrix} t_x \\ t_y \end{bmatrix}$, where $q=(a,b,t_x,t_y)$ and may be obtained by calculating with the eye matching algorithm. Those three kinds of feature appearance models are calculated for transformed images to obtain $A(I(N(W(x|p))|q))$; an appearance model difference value $A(I(N(W(x|p))|q)) - A_0(x)$ is calculated; and then $(\nabla q, \nabla p) = H^{-1} \sum SD^T \cdot (A(I(N(W(x|p))|q)) - A_0(x))$ is calculated; where $H$ represents a Hessian matrix (which is a square matrix formed of second-order partial derivatives of a real-valued function whose independent variable is a vector), $SD$ represents the steepest descent graph which is calculated by the following formulas in advance when models are trained:

$$SD = \nabla A_0 \frac{\partial W}{\partial p} - \sum_{i=1}^{m} \left[ \sum A_i \cdot \nabla A_0 \frac{\partial W}{\partial p} \right] A_i ;$$

$$H = \sum SD^T \cdot SD .$$

A shape parameter $(N{\circ}W)(x;q,p) \leftarrow (N{\circ}W)(x;q,p){\circ}(N{\circ}W)(x;\nabla q,\nabla p)^{-1}$ is updated till $\|(\nabla q, \nabla p)\| < \varepsilon$.

Step S260: determining whether the human facial feature points are fitted successfully, and if so, executing Step S270; otherwise, executing Step S200 again.

Step S270: accomplishing the locating of the human facial feature points according to a result of the fitting, obtaining an eye image according to the human facial feature points, and matching, in the eye searching ROI, locations of both eyes in an image of a next frame by taking an eye image in the image of the previous frame as a template.

In Step S270, an image of both eyes is obtained according to the locations of the human facial feature points, an eye searching ROI in the image of the next frame is determined, and locations of both eyes in the current frame are re-matched in the determined eye searching ROI by using the image matching algorithm and taking an eye image in an image of a previous frame as a template.

In the method for locating human facial feature points according to the present embodiment of the disclosure, human facial feature points are fitted by using an Inverse Compositional algorithm according to the preliminary location information in conjunction with grayscale features, gradient features, and edge and angular point features, so as to complete accurate locating of the human facial feature points. Appearance models such as gradient values in directions of X axis and Y axis as well as edge and angular point features are added in the Active Appearance Model (AAM), thus making the fitting of the human facial feature points more accurate and effectively alleviating a problem of an existing AAM that local minimization and poor anti-interference ability likely occurs in the process of fitting.

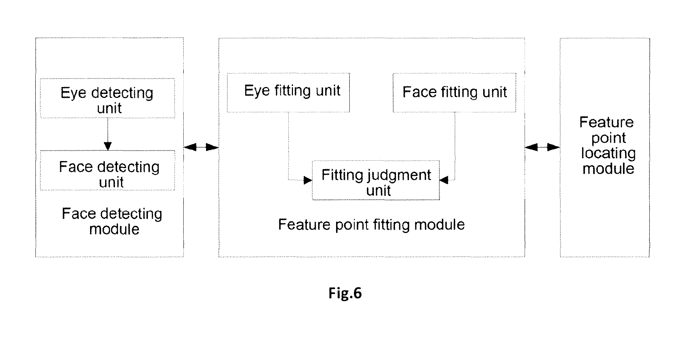

Referring to Fig. 6 which is a schematic structural diagram showing a device for locating human facial feature points in the disclosure, and the device for locating human facial feature points in the disclosure includes a face detecting module, a feature point fitting module and a feature point locating module. The face detecting module is configured to preliminarily locate a location of a human face by a face detecting technology in combination with an eye matching technology, where cascaded Harr feature classifiers are adopted by the face detecting module to detect the human face so as to obtain preliminary location information (x, y) and preliminary facial size information s of the human face, and an eye matching algorithm is further adopted to match location information of both eyes, so that the human face position may be more accurately detected compared with the case of using a face detecting method only. The feature point fitting module is configured to fit the human facial feature points according to the preliminary location information in combination of an AAM, where the AAM includes features such as grayscale, gradient, edge and angular point. The feature point locating module is configured to accomplish the locating of the human facial feature points according to a result of the fitting.

The face detecting module includes an eye detecting unit and a face detecting unit.

The eye detecting unit is configured to determine whether an eye is detected from an image of a previous frame, and if an eye is detected from the image of the previous frame, search in the eye searching ROI (which is a term in picture processing) to match location information of the eye; otherwise, the face detecting unit detects the human face; as such, an eye matching algorithm is adopted for eye matching in addition to the face detecting in the present embodiment of the disclosure, thus the human face location may be located more accurately compared with the case of using the face detecting method only. The eye searching ROI may be determined in such a way that: a center of the eye searching ROI overlaps with a center of an eye, and if eye_height and eye_width respectively represent a height and a width of an eye, ann roi_height and roi_width respectively represent a height and a width of an eye searching ROI, specifically referring to Fig. 3 which is a schematic diagram of the eye searching ROI of the disclosure where an image of a left eye is enclosed by a smaller frame and a left eye searching ROI is enclosed by a big frame outside of the smaller frame, then,

$$roi\_height = \alpha \bullet eye\_height;$$

$$roi\_width = \beta \bullet eye\_width;$$

where $\alpha$ and $\beta$ represent ROI size control factors, and in the present embodiment of the disclosure, $\alpha=3$, and $\beta=2$; and the eye matching algorithm specifically includes that: if $T(x,y)$ represents an eye image, $I(x,y)$ represents a searching ROI, and *R(x,y)* represents a matching resultant image, hence

$$R(x,y) = \frac{\sum\limits_{x',y'}(T(x',y') \bullet I(x+x',y+y'))}{\sqrt{\sum\limits_{x',y'} T(x',y')^2 \bullet \sum\limits_{x',y'} I(x+x',y+y')^2}}.$$

The matching resultant image *R(x,y)* is located at a best-matching location in the searching ROI *I(x,y)* and the eye image *T(x,y)* when the matching resultant image R (x, y) reaches its maximum value.

The face detecting unit is configured to detect a human face and determine whether the human face is detected, and if the human face is detected, obtain the preliminary location information (x, y) and the preliminary facial size information s of the human face; otherwise, a video is inputted again; here, cascaded Harr feature classifiers are adopted for detecting the human face in an embodiment of the disclosure, so as to obtain preliminary location information and preliminary facial size information of the human face.

The feature point fitting module includes an eye fitting unit, a face fitting unit and a fitting judgment unit.

The eye fitting unit is configured to fit the facial feature points by the AAM according to the preliminary location information of the eye, and whether the fitting is successful is determined by the fitting judgment unit.

The face fitting unit is configured to fit the facial feature points by the AAM according to the preliminary location information and the preliminary facial size information of the human face in conjunction with features such as grayscale values, gradient values in directions of X axis and Y axis of the preliminary location of the human face, and edges and angular points, and whether the fitting is successful is determined by the fitting judgment unit. As such, after the preliminary location information and the preliminary facial size information of the human face are obtained, features such as grayscale values, gradient values in directions of X axis and Y axis of the preliminary location of the human face, and edges and angular points are combined as an appearance model of the AAM, so as to implement the fitting of the human facial feature points, thus making the location obtained from the fitting of the human facial feature points more accurate. The ASM of the human facial feature points may be represented by a vector $S = \{x_1, y_1 ... x_n, y_n\}$, the $x_i$, $y_i$ represent a location coordinate of the i-*th* human facial feature point. In the present embodiment of the disclosure, 82 facial label points are adopted, specifically referring to Fig. 4 which is a schematic diagram showing label points of the human facial feature points in the disclosure. In a training process of the AAM, a certain number of facial expression images are collected, location coordinates of 82 human facial feature points are labeled manually as shown in Fig. 4 so as to obtain a coordinate vector $S = (x_1, y_1, x_2, y_2 ... x_{82}, y_{82})$ of the human facial feature points, a Procrustes algorithm is conducted on the coordinate vector of the human facial feature points for the purpose of geometrical alignment, and then the principal components analysis (PCA) based learning is performed based on the training data to obtain

$$S = S_0 + \sum_{i=1}^{m} p_i S_i$$

where $S_0$ represents an average shape, $S_i$ represents a PCA base of a shape, and $p_i$ represents a factor of the PCA base. A vector S of a corresponding AAM can be obtained as long as the respective factors $p_i$ are calculated in the process of fitting. The modeling approach of the shape model of the human facial feature points in the disclosure specifically includes: excising a mean for coordinate vectors of all facial feature points, and transferring the coordinate vectors to a centroidal coordinate system; selecting a sample as an initial average shape, and calibrating a dimension of the initial average shape so that $|\overline{S}| = 1$; denoting the estimated initial average shape as $\overline{S_0}$, and regarding $\overline{S_0}$ as a reference coordinate system; calibrating coordinate vectors of feature points of all training samples onto the current average shape through affine transformation; recalculating an average shape for all calibrated samples; calibrating the current average shape onto $\overline{S_0}$, obtaining $|\overline{S}| = 1$; determining whether the calibrated average shape is greater than a given threshold value, and if the calibrated average shape is greater than the given threshold value, calibrating coordinate vectors of feature points of all training samples through affine transformation again; otherwise, conducting statistical shape modeling for aligned samples through a PCA approach, to obtain

$$S = S_0 + \sum_{i=1}^{m} p_i S_i.$$

An AAM $A$ is obtained by mapping points from a region surrounded by an ASM onto the average shape, where a piecewise affine mapping algorithm may be adopted for the mapping here; similarly, the PCA based learning may be conducted for the AAM, to obtain

$$A = A_0 + \sum_{i=1}^{n} \lambda_i A_i$$

where $A_0$ represents an average appearance, $A_i$ represents a PCA base of the AAM, and $\lambda_i$ represents a factor of the PCA base.

A modeling approach of the AAM specifically includes: mapping each training sample into the average shape, and then respectively calculating three kinds of features including grayscale values, gradient values in directions of X axis and Y axis, and feature values of edges and angular points so as to form the AAM; where a grayscale value $A_{gray}$ may be calculated in such a way that: if $I(x,y)$ denotes a grayscale image of each sample mapped into the average shape, then a value of a grayscale appearance model is:

$$A_{gray}(x, y) = I(x, y)$$
.

The gradient values in directions of X axis and Y axis may be calculated in such a way of: calculating gradient values in directions of X axis and Y axis by using a Sobel operator (which is one of operators in image processing, and is mainly used for edge detecting):

$$G_x(x, y) = \begin{bmatrix} -1 & 0 & 1 \\ -2 & 0 & 2 \\ -1 & 0 & 1 \end{bmatrix} * I(x, y)$$

$$G_y(x, y) = \begin{bmatrix} -1 & -2 & -1 \\ 0 & 0 & 0 \\ 1 & 2 & 1 \end{bmatrix} * I(x, y)$$
.

Hence, values $A_{dx}$ and $A_{dy}$ of appearance models of gradient values in directions of X axis and Y axis can be obtained with following formulas:

$$A_{dx}(x, y) = G_x(x, y)^2;$$

$$A_{dy}(x, y) = G_y(x, y)^2.$$

The edge and angular point features $A_{edge\_and\_corner}$ may be calculated in such a way that: after gradient values in directions of X axis and Y axis are obtained, assuming:

$$Edge_{xx}(x, y) = G_x(x, y) \cdot G_x(x, y);$$

$$Edge_{yy}(x, y) = G_y(x, y) \cdot G_y(x, y);$$

$$Edge_{xy}(x, y) = G_x(x, y) \cdot G_y(x, y);$$

then $Edge_{xx}(x,y), Edge_{yy}(x,y), Edge_{xy}(x,y)$ are respectively filtered by using a 3x3 Gaussian window to obtain:

$$Edge_{xx}{}'(x,y) = \begin{bmatrix} 1 & 2 & 1 \\ 2 & 4 & 2 \\ 1 & 2 & 1 \end{bmatrix} * Edge_{xx}(x,y);$$

$$Edge_{yy}{}'(x,y) = \begin{bmatrix} 1 & 2 & 1 \\ 2 & 4 & 2 \\ 1 & 2 & 1 \end{bmatrix} * Edge_{yy}(x,y);$$

$$Edge_{xy}{}'(x,y) = \begin{bmatrix} 1 & 2 & 1 \\ 2 & 4 & 2 \\ 1 & 2 & 1 \end{bmatrix} * Edge_{xy}(x,y);$$

and the edge and angular point features are calculated by the following formula:

$$A_{edge\_and\_corner}(x,y) =$$
$$(Edge_{xx}{}'(x,y) + Edge_{yy}{}'(x,y))^2 - 2 \cdot (Edge_{xx}{}'(x,y) \cdot Edge_{yy}{}'(x,y) - Edge_{xy}{}'(x,y) \cdot Edge_{xy}{}'(x,y))$$

The features such as grayscale values, gradient values in directions of X axis and Y axis, and edges and angular points are not represented in the same scale, and therefore need to be normalized to the same scale after calculation. A Sigmoidal approach is selected for such normalization of feature values in the present embodiment of the disclosure specifically as follows:

$$A_{gray}{}'(x,y) = A_{gray}(x,y) / (A_{gray}(x,y) + \overline{A_{gray}(x,y)}) \; ;$$

$$A_{dx}{}'(x,y) = A_{dx}(x,y) / (A_{dx}(x,y) + \overline{A_{dx}(x,y)}) \; ;$$

$$A_{dy}{}'(x,y) = A_{dy}(x,y) / (A_{dy}(x,y) + \overline{A_{dy}(x,y)}) \; ;$$

$$A_{edge\_and\_corner}{}'(x,y) =$$
$$A_{edge\_and\_corner}(x,y) / (A_{edge\_and\_corner}(x,y) + \overline{A_{edge\_and\_corner}(x,y)}) .$$

After the normalization, these three kinds of features including grayscale values, gradient values in directions of X axis and Y axis, and edges and angular points are all in the same scale, and each training sample corresponds to these three kinds of features and four feature values; after the AAM with four feature values is obtained, the PCA based learning results in:

$$A = A_0 + \sum_{i=1}^{n} \lambda_i A_i .$$

In an embodiment of the disclosure, an Inverse Compositional algorithm (which is a commonly used algorithm in the art) is adopted to fit the human facial feature points and specifically includes: transforming an input image $I(x,y)$ according to four initial global affine transformation parameters $q$ obtained by a face detecting algorithm or an eye matching algorithm, obtaining $I(N(W(x|p)|q))$, where $W$ is defined as piecewise affine mapping from a basic shape $S_0$ to

the current shape $S$, $N$ represents two-dimension similarity transformation, and $q$ represents a parameter of the similarity transformation, hence $N(x|q) = \begin{bmatrix} 1+a & -b \\ b & 1+b \end{bmatrix}\begin{bmatrix} x \\ y \end{bmatrix} + \begin{bmatrix} t_x \\ t_y \end{bmatrix}$ , where $q=(a,b,t_x,t_y)$ and may be obtained by calculating with the eye matching algorithm. Those three kinds of feature appearance models are calculated for transformed images to obtain $A(I(N(W(x|\text{p}))q))$ ; an appearance model difference value $A(I(N(W(x|\text{p}))|q))-A_0(x)$ is calculated; and then $(\nabla q,\nabla p)=H^{-1}\sum SD^T\cdot(A(I(N(W(x|\text{p}))|q))-A_0(x))$ is calculated; where $H$ represents a Hessian matrix (which is a square matrix formed of second-order partial derivatives of a real-valued function whose independent variable is a vector), $SD$ represents the steepest descent graph which is calculated by the following formulas in advance when models are trained:

$$SD = \nabla A_0 \frac{\partial W}{\partial p} - \sum_{i=1}^{m}\left[\sum A_i \cdot \nabla A_0 \frac{\partial W}{\partial p}\right]A_i \; ;$$

$$H = \sum SD^T \cdot SD \, .$$

A shape parameter $(N{\circ}W)(x;q,p)\leftarrow(N{\circ}W)(x;q,p){\circ}(N{\circ}W)(x;\nabla q,\nabla p)^{-1}$ is updated till $\|(\nabla q, \nabla p)\|<\varepsilon$.

The fitting judgment unit is configured to determine whether the human facial feature points are fitted successfully, and if so, the human facial feature points are located by the feature point locating module; otherwise, a video is inputted again.

The feature point locating module is configured to accomplish the locating of the human facial feature points according to a result of the fitting, obtain an eye image according to the human facial feature points, and match, in the eye searching ROI, locations of both eyes in an image of a next frame by the eye detecting unit by taking an eye image in the image of the previous frame as a template. An image of both eyes can be obtained according to the locations of the human facial feature points, an eye searching ROI in the image of the next frame is determined, and locations of both eyes in the current frame are obtained in the determined eye searching ROI by using image matching algorithm and taking an eye image in an image of a previous frame as a template.

Those of ordinary skills in the art would understand that all or part of steps for achieving the above embodiments may be accomplished through hardware, or through a program instructing corresponding hardware. The program may be stored in a computer-readable storage medium and is executable by at least one computer processor, so as to implement methods and flows shown in Fig. 1, Fig. 2 and Fig. 5. The above-mentioned storage medium may be a read-only memory, a disk or a compact disc and the like.

The method and device for locating human facial feature points and the storage medium according to the embodiments of the disclosure implement preliminary locating of a face location by the face detecting technology in combination with the eye matching technology, therefore the facial location information of the human face can be located more accurately compared with the case of using the face detecting technology only. And the human facial feature points are fitted by using an Inverse Compositional algorithm according to the preliminary location information in conjunction with grayscale features, gradient features, and edge and angular point features, so as to complete the accurate locating of the human facial feature points. Appearance models such as gradient values in directions of X axis and Y axis as well as edge and angular point features are added in the AAM, thus making the fitting of the human facial feature points more accurate and effectively alleviating a problem of an existing AAM that local minimization and poor anti-interference ability likely occurs in the process of fitting.

The preferred embodiments of the disclosure have been described as above, but are not intended to limit the disclosure. Any modifications, equivalent replacement or improvements within the spirit and principles of the disclosure fall within the protection scope of the disclosure.

**Claims**

1. A method for locating human facial feature points, comprising steps of:

   preliminarily locating a human face location by a face detecting technology in combination with an eye matching technology, and obtaining preliminary location information;
   fitting human facial feature points according to the preliminary location information; and
   accomplishing locating of the human facial feature points according to a result of the fitting.

**2.** The method for locating human facial feature points according to claim 1, wherein, the step of preliminarily locating a human face location by a face detecting technology in combination with an eye matching technology and obtaining preliminary location information specifically comprises: detecting a human face by cascaded feature classifiers, to obtain the preliminary location information and preliminary facial size information of the human face.

**3.** The method for locating human facial feature points according to claim 1 or 2, wherein, before the step of preliminarily locating a human face location by a face detecting technology in combination with an eye matching technology and obtaining preliminary location information, the method further comprises: inputting a video, and obtaining corresponding human face image information in the video; wherein the preliminary locating comprises obtaining preliminary locations of both eyes, a preliminary location of the human face, and a preliminary size of the human face.

**4.** The method for locating human facial feature points according to claim 1, wherein, processing preliminarily locating a human face location by a face detecting technology in combination with an eye matching technology comprises: determining whether an eye is detected in an image of a previous frame, and if an eye is detected in the image of the previous frame, preliminarily locating the human face through the eye matching technology; otherwise, detecting and locating the human face.

**5.** The method for locating human facial feature points according to claim 1 or 4, wherein, preliminarily locating a human face location by the eye matching technology comprises: searching in an eye searching Region of Interest, to match preliminary location information of the eye, and fitting the human facial feature points according to the preliminary location information of the eye.

**6.** The method for locating human facial feature points according to claim 4, wherein, detecting and locating the human face comprises: detecting a face and determining whether a face is detected, and if a face is detected, obtaining the preliminary location information and the preliminary facial size information of the human face, and fitting the human facial feature points according to the preliminary location information and the preliminary facial size information of the human face in conjunction with features comprising grayscale values, gradient values in directions of X axis and Y axis of the preliminary location of the human face, and edges and angular points; otherwise, inputting a video again.

**7.** The method for locating human facial feature points according to claim 3, after fitting the human facial feature points, further comprising: determining whether the human facial feature points are fitted successfully, and if the human facial feature points are fitted successfully, accomplishing the locating of the human facial feature points according to the result of the fitting, obtaining an eye image according to the human facial feature points, and matching, in the eye searching ROI, locations of both eyes in an image of a next frame by taking an eye image in an image of a previous frame as a template; otherwise, inputting a video again.

**8.** A device for locating human facial feature points, comprising a face detecting module, a feature point fitting module and a feature point locating module; wherein the face detecting module is configured to preliminarily locating for a location of a human face through a face detecting technology and an eye matching technology; the feature point fitting module is configured to fit human facial feature points according to the preliminary location information; and the feature point locating module is configured to accomplish the locating of the human facial feature points according to a result of the fitting.

**9.** The device for locating human facial feature points according to claim 8, wherein, the face detecting module preliminarily locates the location of the human face through the face detecting technology in such a way comprising: detecting the human face through cascaded feature classifiers, so as to obtain the preliminary location information and preliminary facial size information of the human face.

**10.** The device for locating human facial feature points according to claim 8 or 9, wherein, the face detecting module comprises an eye detecting unit and a face detecting unit,
the eye detecting unit is configured to determine whether an eye is detected in an image of a previous frame, and if an eye is detected in the image of the previous frame, search in the eye searching ROI to match location information of the eye; otherwise, the face detecting unit detects the human face; and
the face detecting unit is configured to detect the human face and determine whether the human face is detected, and if the human face is detected, obtain the preliminary location information and the preliminary facial size information of the human face; otherwise, a video is inputted again.

**11.** The device for locating human facial feature points according to claim 8 or 9, wherein, the feature point fitting module comprises an eye fitting unit and a face fitting unit,
the eye fitting unit is configured to fit the facial feature points according to the preliminary location information of the eye, and a fitting judgment unit is configured to determine whether the fitting is successful; and
the face fitting unit is configured to fit the human facial feature points according to the preliminary location information and the preliminary facial size information of the human face in conjunction with features comprising grayscale values, gradient values in directions of X axis and Y axis of the preliminary location of the human face, and edges and angular points, and the fitting judgment unit is configured to determine whether the fitting is successful.

**12.** The device for locating human facial feature points according to claim 11, wherein, the feature point fitting module further comprises a fitting judgment unit, which is configured to determine whether the fitting of the human facial feature points is successful, and if the fitting of the human facial feature points is successful, the human facial feature points are located by the feature point locating module; otherwise, a video is inputted again.

**13.** The device for locating human facial feature points according to claim 11, wherein, the feature point locating module is configured to accomplish the locating of the human facial feature points according to a result of the fitting, and obtain an eye image according to the human facial feature points, so that the eye detecting unit matches, in the eye searching ROI, locations of both eyes in an image of a next frame by taking an eye image in the image of the previous frame as a template.

**14.** One or more storage media comprising computer-executable instructions, wherein the computer-executable instructions are configured to execute a method for locating human facial feature points comprising:

preliminarily locating a human face location by a face detecting technology in combination with an eye matching technology, and obtaining preliminary location information;
fitting human facial feature points according to the preliminary location information; and
accomplishing locating of the human facial feature points according to a result of the fitting.

Preliminarily locate a human face location
through a face detecting technology in combination
with an eye matching technology

S100

Fit human facial feature points according
to the preliminary location information

S110

Accomplish the locating of human facial feature points
according to a result of the fitting

S120

Fig.1

EP 2 863 335 A1

Input a video and obtain image information — S200

Determine whether an eye is detected in an image of a previous frame — S210

Yes

No

Search in the eye searching ROI to match preliminary location information of the eye — S220

Detect a human face and determine whether a face is detected — S240

No

Fit facial feature point by the AAM according to the preliminary location information of the eye — S230

Yes

Obtain the preliminary location information (x, y) and the preliminary facial size information s of the human face, and fit the facial feature point by the AAM according to the preliminary location information and the preliminary facial size information in conjunction with features such as grayscale values, gradient values in directions of X axis and Y axis, and edges and angular points — S250

No

Determine whether facial feature points are fitted successfully — S260

Yes

Accomplish the locating of facial feature points according to a result of the fitting, obtain an eye image according to facial feature points, and matches, in the eye searching ROI, locations of both eyes in an image of a next frame by taking an eye image in the image of the previous frame as a template — S270

**Fig. 2**

16

Fig.3

Fig.4

Excise a mean for coordinate vectors of all facial feature points, and transfer the coordinate vectors to a centroidal coordinate system — S251

Select a sample as an initial average shape, and calibrate a dimension of the initial average shape so that $|S| = 1$ — S252

Denote the estimated initial average shape as $S_0$, and regard $S_0$ as a reference coordinate system — S253

Calibrate coordinate vectors of feature points of all training samples onto the current average shape through affine transformation — S254

Recalculate an average shape for all calibrated samples — S255

Calibrate the current average shape onto $S_0$, and make $|S| = 1$ — S256

Determine whether the calibrated average shape is greater than a given threshold value — S257

Yes

No

Conduct statistical shape modeling for aligned samples through a PCA approach, to obtain $S = S_0 + \sum_{i=1}^{m} p_i S_i$ — S258

Fig.5

| Face detecting module | | Feature point fitting module | | Feature point locating module |
|---|---|---|---|---|

Eye detecting unit → Face detecting unit

**Face detecting module**

Eye fitting unit    Face fitting unit

Fitting judgment unit

**Feature point fitting module**

**Feature point locating module**

**Fig.6**

<div align="center">

**INTERNATIONAL SEARCH REPORT**

</div>

| International application No. |
| --- |
| PCT/CN2013/080526 |

**A. CLASSIFICATION OF SUBJECT MATTER**

G06K 9/00 (2006.01) i

According to International Patent Classification (IPC) or to both national classification and IPC

**B. FIELDS SEARCHED**

Minimum documentation searched (classification system followed by classification symbols)

IPC: G06K

Documentation searched other than minimum documentation to the extent that such documents are included in the fields searched

Electronic data base consulted during the international search (name of data base and, where practicable, search terms used)

WPI, EPODOC, CNPAT, CNKI, IEEE: ROI, face, eye+, active, appearance, model, AAM, ASM, shape, frame, match+, compare+, region, interest, next, identify, location, position, video, fitting, track, cascade, Harr, classifier

**C. DOCUMENTS CONSIDERED TO BE RELEVANT**

| Category* | Citation of document, with indication, where appropriate, of the relevant passages | Relevant to claim No. |
| --- | --- | --- |
| X | CN 101216882 A (BEIJING ZHONGXING MICROELECTRONICS CO., LTD.) 09 July 2008 (09.07.2008) claims 1, 4, 7, 9, description, pages 6, 9, 10 and figures 1-6 | 1-14 |
| A | CN 101339606 A (BEIJING ZHONGXING MICROELECTRONICS CO., LTD.) 07 January 2009 (07.01.2009) the whole document | 1-14 |
| A | CN 1687957 A (SHANGHAI JIAOTONG UNIVERSITY) 26 October 2005 (26.10.2005) the whole document | 1-14 |
| A | CN 1731416 A (SHANGHAI JIAOTONG UNIVERSITY) 08 February 2006 (08.02.2006) the whole document | 1-14 |
| A | CN 1794265 A (BEIJING ZHONGXING MICROELECTRONICS CO., LTD.) 28 June 2006 (28.06.2006) the whole document | 1-14 |
| A | US 2006/0133672 A1 (LI, Yuanzhong) 22 June 2006 (22.06.2006) the whole document | 1-14 |

☐ Further documents are listed in the continuation of Box C. ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 18 October 2013 (18.10.2013) | 07 November 2013 (07.11.2013) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>TIAN, Yue<br><br>Telephone No. (86-10) 62413698 |

Form PCT/ISA/210 (second sheet) (July 2009)

## INTERNATIONAL SEARCH REPORT
Information on patent family members

| | International application No. |
|---|---|
| | PCT/CN2013/080526 |

| Patent Documents referred in the Report | Publication Date | Patent Family | Publication Date |
|---|---|---|---|
| CN 101216882 A | 09.07.2008 | None | |
| CN 101339606 A | 07.01.2009 | None | |
| CN 1687957 A | 26.10.2005 | None | |
| CN 1731416 A | 08.02.2006 | None | |
| CN 1794265 A | 28.06.2006 | None | |
| US 2006/0133672 A1 | 22.06.2006 | JP 2006-202276 A | 03.08.2006 |

Form PCT/ISA /210 (patent family annex) (July 2009)